Europäisches Patentamt

European Patent Office

Office européen des brevets

(11) Publication number: **0 291 641**
**A1**

## EUROPEAN PATENT APPLICATION

(21) Application number: **88102818.7**

(22) Date of filing: **25.02.88**

(51) Int. Cl.⁴: **A47J 27/08**

(30) Priority: **18.05.87 JP 74057/87**
**31.08.87 JP 133024/87**

(43) Date of publication of application:
**23.11.88 Bulletin 88/47**

(84) Designated Contracting States:
**DE FR IT**

(71) Applicant: **TAIYO ALTIGHT KOGYO CO., LTD.**
**5-6, Komagata 2-chome Taito-ku**
**Tokyo(JP)**

(72) Inventor: **Ito, Motohiko**
**1-2-18, Kitakokubu**
**Ichikawa-shi Chiba-ken(JP)**

(74) Representative: **Füchsle, Klaus, Dipl.-Ing. et al**
**Hoffmann . Eitle & Partner Patentanwälte**
**Arabellastrasse 4**
**D-8000 München 81(DE)**

(54) **Regulated-pressure cooker.**

(57) A regulated-pressure cooker is disclosed which is capable of cooking under a significantly lower pressure than in the case of pressure cookers. The regulated-pressure cooker has a pressure regulating valve (15) for regulating the pressure inside the cooker body, the pressure regulating valve (15) maintaining the pressure inside the body at 0.05 kg/cm² or less in terms of gage pressure. Thus, it is possible to open the lid (2) during cooking without any problem concerning safety and yet to reduce the time required to complete cooking by a large margin compared with ordinary cookers.

*Fig. 2*

## REGULATED-PRESSURE COOKER

The present invention relates to a regulated-pressure cooker designed on the basis of a completely novel concept. The regulated-pressure cooker is similar to conventional pressure cookers, and yet is capable of cooking food under a considerably lower pressure than in the case of pressure cookers.

Pressure cookers are well known and have already been widely used. Pressure cookers have the advantages that it is possible to soften food materials which cannot be made soft by ordinary cooking and it is also possible to reduce by a large margin the time required to complete cooking, and their utility is therefore considerable. However, since the set pressure of pressure cookers is disadvantageously high, it is difficult and dangerous to remove the lid while the contents are being heated.

More specifically, the pressure cookers which are commercially available at present have such high set pressures that the internal pressure during cooking reaches 0.2 kg/cm$^2$ in terms of gage pressure. This high pressure is utilized on the basis that it is beneficial to raise the pressure as much as possible so long as no problem arises concerning safety since it is generally recognized that the higher the pressure, the better the pressure cooker performance. In "Standards for Certification of Domestic Pressure Cookers and Certifying Method" determined by the Japan Product Safety Society, the pressure range is specified to be 0.1 kg/cm$^2$ (gage pressure) or more. Thus, it is generally recognized that the pressure of pressure cookers is set at such high pressures.

To remove the lid from such a pressure cooker, it is necessary to wait for the internal pressure to lower sufficiently after the cooker has been left to cool after cooking, or to relieve the internal pressure by actuating a valve; otherwise, there is a risk of the lid being blown off. For this reason, removal of the lid represents a considerably difficult and troublesome task, as also do any attempts to inspect the state of the interior of the pressure cooker or put additional food materials into it during cooking.

Accordingly, it is a primary object of the present invention to provide a regulated-pressure cooker which is free from the above-described problems and yet has far superior pressure cooking characteristics compared with conventional cookers.

The present inventors conducted cooking on an experimental basis using cookers with the internal pressure changed to a variety of pressure levels and have found that, when the set pressure inside the cooker body is 0.05 kg/cm$^2$ or less in terms of gage pressure, it is possible to open the lid during cooking without any problem concerning safety as long as the diameter of the lid is 26 cm or less, which is a common lid size for ordinary cookers, and yet it is possible to reduce the time required to complete cooking by a large margin compared with ordinary cookers. Thus, the present inventors have succeeded in solving the above-described problems by setting the pressure inside the cooker body at the value stated above or less.

The above and other objects, features and advantages of the present invention will become clear from the following description of the preferred embodiment thereof, taken in conjunction with the accompanying drawings, in which:

Fig. 1 is a front elevational view of a regulated-pressure cooker according to the present invention;

Fig. 2 is a plan view of the regulated-pressure cooker shown in Fig. 1;

Fig. 3 is a sectional view taken along the line A - A of Fig. 2; and

Fig. 4 is a sectional view showing a pressure regulating valve in detail.

The present invention will be described hereinunder in detail with reference to the accompanying drawings.

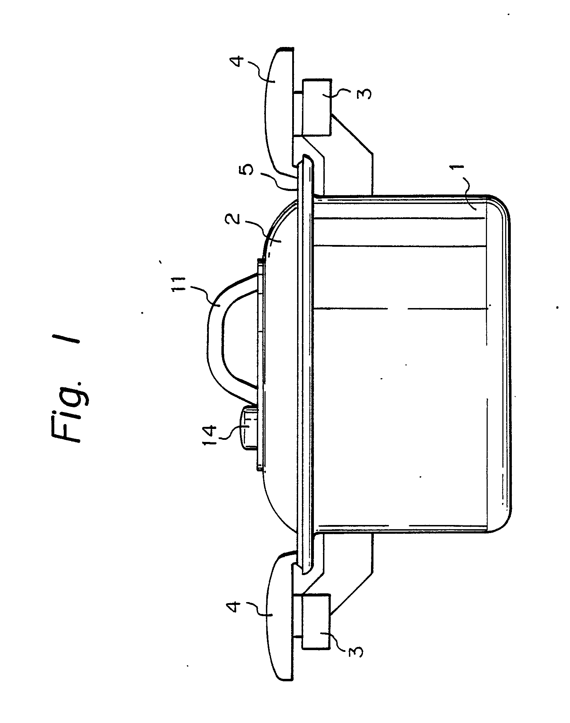

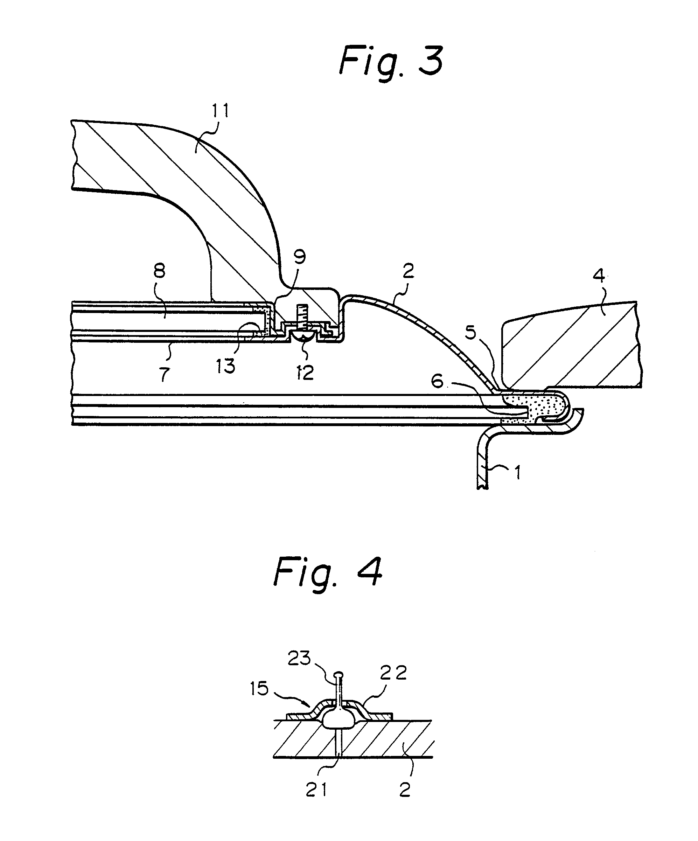

Referring first to Fig. 1, which is a front elevational view of one embodiment of the regulated-pressure cooker according to the present invention, the cooker has a cooker body 1 and a lid 2. Handles 3 are secured to the body 1, and clamp knobs 4 are pivotally attached to the handles 3, respectively. When the clamp knobs 4 are set in the illustrated position, they press a flange portion 5 of the lid 2 against the body 1. A packing 6 (see Fig. 3) is attached to the lower side of the flange portion 5, thereby hermetically sealing the area of contact between the lid 2 and the body 1. The reference numeral 14 denotes a safety valve for relieving the pressure inside the body 1 when the pressure exceeds a predetermined value. The set value of the safety valve 14 is 0.07 kg/cm$^2$ in terms of gage pressure.

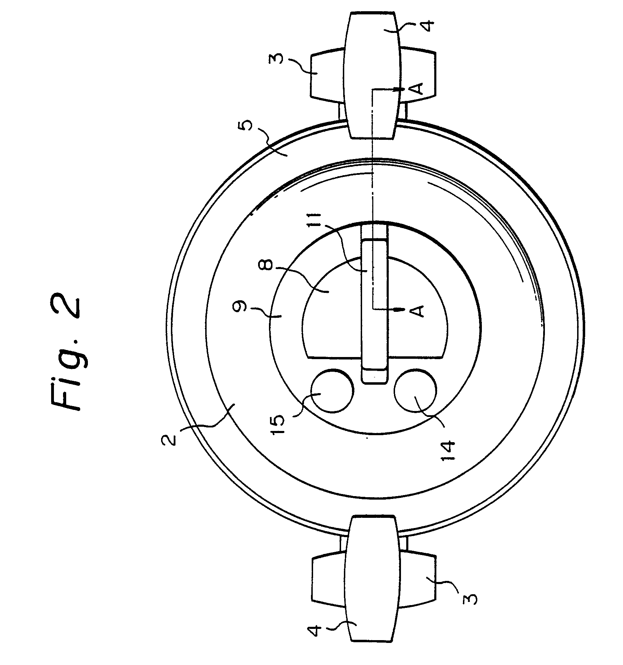

Referring to Fig. 2, which is a plan view of the regulated-pressure cooker, the reference numeral 15 denotes a pressure regulating valve which enables the pressure inside the body 1 to be set as desired within the set pressure of the safety valve 14. The pressure regulating valve 15 is arranged to regulate the pressure by means of the weight of a valve member 23 which is placed on the lid 2 over a vent hole 21 (see Fig. 4) provided in the lid 2, the valve member 23 being retained by a valve retainer 22 in such a manner that the valve member 23 is able to separate from the vent hole 21 by a slight distance. In this embodiment, the weight of the valve member 23 is set by varying it slightly by small so that the average pressure inside the body 1 during cooking is 0.05 kg/cm². The pressure-regulating valve 15 arranged as described above enables the working pressure of the valve to be adjusted simply by changing the weight of the valve member 23, and therefore it is possible to effect fine adjustment. Further, since no spring is employed, there is no change in the set pressure even if the cooker is used for a long period of time.

In this embodiment, a window 7 is provided in the center of the lid 2, and the window 7 is closed by a transparent plate 8, as shown in Fig. 3. In this embodiment, the transparent plate 8 is a glass plate. The glass plate 8 is sandwiched between the lid 2 and a mounting bracket 9 having an opening which has substantially the same configuration as that of the window 7. A handle 11 is provided on the bracket 9. The handle 11 is secured to the lid 2 by means of a screw 12, together with the bracket 9. Thus, the bracket 9 is pressed against the lid 2 and the glass plate 8 is thereby tightly fastened between the bracket 9 and the lid 2 with a packing 13 therearound.

Since the cooker has the window 7, the user is able to look into the interior of the cooker during cooking without the need to remove the lid 2, which is a significant advantage for such a regulated-pressure cooker with its interior under pressure. Although at the beginning of cooking the transparent plate 8 becomes clouded with steam and it is therefore difficult to see the inside of the cooker through the plate 8, it gradually becomes possible to look into the interior as the temperature of the transparent plate 8 rises.

The following are the results of a comparison of cooking performance between a regulated-pressure cooker according to the present invention and conventional cookers.

|  | Ordinary cooker | Cooker of the present invention | Pressure cooker |
|---|---|---|---|
| White rice | 12 min. | 8 min. | 6 min. |
| Borsch | 70 min. | 30 min. | 25 min. |
| Sardines | 120 min. | 60 min. | 40 min. |
| Red beans | 60 min. | 40 min. | 30 min. |

As will be clear from the above, the regulated-pressure cooker according to the present invention enables cooking to be completed within a considerably shorter time than in the case of the ordinary cooker despite utilizing a very much lower pressure than that of the pressure cooker, while the results of cooking with the regulated-pressure cooker are rather close to those attained with the pressure cooker. Although the results obtained with the regulated-pressure cooker approach those for the ordinary cooker as the pressure set according to the present invention is decreased, it is, as a matter of course, still possible to obtain some merits of cooking under pressure which cannot be expected from the ordinary cooker. The present invention is not necessarily limited to the above-described set pressure, but any pressure which is not in excess of that set value is included in the scope of the idea of the present invention.

Although the present invention has been described through specific terms, it should be noted here that the described embodiment is not necessarily exclusive and various changes and modifications may be imparted thereto without departing from the scope of the invention which is limited solely by the appended claims.

**Claims**

1. A regulated-pressure cooker comprising:
a cooker body (1);
a lid (2);
means for fastening said lid to said body (3, 4, 5);
a safety valve (14) for relieving excess pressure inside said cooker body (1); and
a pressure regulating valve (15) for regulating the pressure inside said cooker body (1), said pressure regulating valve (15) maintaining the pressure inside said cooker body (1) at 0.05 kg/cm² or less in terms of gage pressure.

2. A regulated-pressure cooker according to Claim 1, wherein said lid (2) is partially made of a transparent plate (8).

3. A regulated-pressure cooker according to Claim 2, wherein said transparent plate is made of glass.

4. A regulated-pressure cooker according to any one of Claims 1 to 3, wherein said lid (2) has a vent hole (21), said pressure regulating valve (15) comprising a valve member (23) and a valve retainer (22) which retains said valve member (23) over said vent hole (21) in such a manner that said valve member (23) is able to separate from said vent hole (21) by a slight distance.

Fig. 1

0 291 641

Fig. 2

0 291 641

*Fig. 3*

*Fig. 4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 277 241 (S. GIMELLI) <br> * Whole document * | 1 | A 47 J 27/08 |
| X | DE-C- 602 190 (REINSTROM & PILZ) <br> * Whole document * | 1 | |
| X | EP-A-0 177 720 (FISSLER GmbH) <br> * Whole document * | 1 | |
| X | BE-A- 557 473 (LEGENDRE) <br> * Page 3, line 26 - page 4, line 5; figures 1,2,3 * | 1 | |
| A | US-A-2 748 975 (JACOBSON) <br> * Whole document * | 1,2,3 | |
| A | US-A-1 791 361 (KRAUSE) <br> * Whole document * | 1,4 | |
| A | US-A-1 724 101 (McCLURE) <br> * Whole document * | 1 | TECHNICAL FIELDS SEARCHED (Int. Cl.4) |
| A | DE-C-3 343 761 (FISSLER) <br> * Column 2, lines 30-33 * | 1 | A 47 J |

The present search report has been drawn up for all claims

| Place of search | Date of completion of the search | Examiner |
|---|---|---|
| THE HAGUE | 23-08-1988 | SCHARTZ J. |